# EUROPEAN PATENT APPLICATION

(11) **EP 4 770 252 A1**
(43) Date of publication of application: **01.07.2026**
(21) Application number: 24869690.8
(22) Date of filing: 23.04.2024
(51) Int. Cl.: H04W 74/00

(54) **DATA TRANSMISSION METHOD, ELECTRONIC DEVICE, AND STORAGE MEDIUM**

(30) Priority: 28.09.2023 CN 202311282217
(71) Applicant: ZTE Corporation, Shenzhen, Guangdong 518057 (CN)
(72) Inventor: SHA, Xiubin, Shenzhen, Guangdong 518057 (CN); DAI, Bo, Shenzhen, Guangdong 518057 (CN); GAO, Yuan, Shenzhen, Guangdong 518057 (CN); HUANG, He, Shenzhen, Guangdong 518057 (CN)
(74) Representative: Savi, Massimiliano
(86) International application number: PCT/CN2024/089352
(87) International publication number: WO 2025/066121

(57) **Abstract**

The present application relates to but is not limited to the technical field of communications, and provides a data transmission method, an electronic device, and a storage medium. The data transmission method comprises: a user equipment (UE) and a radio access network (RAN) node carry out bottom layer signaling transmission carrying a non-access stratum protocol data unit (NAS PDU).

## Description

### CROSS-REFERENCE TO RELATED APPLICATIONS

This application is filed based on and claims priority to Chinese Patent Application No. 202311282217.1, filed on September 28, 2023, the entire contents of which are incorporated herein by reference.

### TECHNICAL FIELD

The embodiments of the present disclosure relate to, but are not limited to, the field of communication technologies, and particularly relate to a data transmission method, an electronic device, and a storage medium.

### BACKGROUND

With the development of wireless communication technologies, communication systems are required to support an increasing number of users and devices simultaneously. In practical applications, there are scenarios involving small data transmission between users and devices, and the increase in small data transmission correspondingly increases the load on communication systems. Although in existing technologies, communication systems have proposed different technical schemes for small data transmission to balance the system load, such as using Pre-configured Uplink Resource (PUR) or Early Data Transmission (EDT) in Narrow Band Internet of Things (NB-IoT) and enhanced Machine-Type Communication (eMTC) for small data transmission, both PUR and EDT can only transmit one uplink data packet or downlink data packet at a time. In the New Radio (NR) system, Configured Grant (CG) and Random Access (RA) are also used for small data transmission. However, these methods involve Radio Resource Control (RRC) messages. Therefore, in existing technologies, small data transmission techniques still suffer from low transmission efficiency.

### SUMMARY

The following is a summary of the subjects described in detail herein. This summary is not intended to limit the scope of the appended claims.

In accordance to a first aspect of the present disclosure, an embodiment provides a data transmission method. The method is applied to a user equipment (UE) and includes a process of transmitting lower-layer signaling carrying a Non-Access Stratum Protocol Data Unit (NAS PDU) with a Radio Access Network (RAN) node.

In accordance to a second aspect of the present disclosure, an embodiment provides a data transmission method. The method is applied to a Radio Access Network (RAN) node and includes a process of transmitting lower-layer signaling carrying an NAS PDU with a UE.

In accordance to a third aspect of the present disclosure, an embodiment provides an electronic device. The electronic device includes a memory, a processor, and a computer program stored on the memory and executable on the processor. When the processor executes the computer program, the data transmission method according to the first aspect or the data transmission method according to the second aspect is implemented.

In accordance to a fourth aspect of the present disclosure, an embodiment provides a computer-readable storage medium. The computer-readable storage medium stores a computer program, which, when executed by a processor, causes the processor to implement the method according to the first aspect or the method according to the second aspect.

### DESCRIPTION OF DRAWINGS

FIG. 1 is a schematic diagram illustrating lower-layer signaling interactions in an embodiment of the data transmission method provided by the present disclosure applied to a communication system;
FIG. 2 is a schematic diagram illustrating NAS PDU interactions in another embodiment of the data transmission method provided by the present disclosure applied to a communication system;
FIG. 3 is a schematic diagram illustrating lower-layer signaling interactions in another embodiment of the data transmission method provided by the present disclosure applied to a communication system;
FIG. 4 is a schematic flowchart of the data transmission method applied to a UE provided by the present disclosure;
FIG. 5 is a schematic diagram illustrating the composition of a MAC CE in an embodiment of the data transmission method provided by the present disclosure;
FIG. 6 is a schematic diagram illustrating the composition of a MAC CE in another embodiment of the data transmission method provided by the present disclosure;
FIG. 7a is a schematic diagram illustrating interactions in the MO procedure of a first embodiment of the data transmission method provided by the present disclosure;
FIG. 7b is a schematic diagram illustrating interactions in the MO procedure of a second embodiment of the data transmission method provided by the present disclosure;
FIG. 7c is a schematic diagram illustrating interactions in the MT procedure of a first embodiment of the data transmission method provided by the present disclosure;
FIG. 7d is a schematic diagram illustrating interactions in the MT procedure of a second embodiment of the data transmission method provided by the present disclosure;
FIG. 8 is a schematic diagram illustrating interactions in the NAS cipher key negotiation process of the data transmission method provided by the present disclosure;
FIG. 9a is a schematic diagram illustrating interactions for SR or BSR transmission using preconfigured resources in the power saving state of a UE in the data transmission method provided by the present disclosure;
FIG. 9b is a schematic diagram illustrating interactions for small data transmission using preconfigured resources in the power saving state of a UE in the data transmission method provided by the present disclosure;
FIG. 10 is a schematic flowchart illustrating a data transmission method applied to a RAN node provided by the present disclosure; and
FIG. 11 is a schematic diagram of the hardware structure of an electronic device according to an embodiment of the present disclosure.

### DETAILED DESCRIPTION

To make the objectives, technical schemes, and advantages of the present disclosure clearer, the following further describes the present disclosure in detail with reference to the accompanying drawings and embodiments. It should be understood that the specific embodiments described herein are merely intended to explain the present disclosure and not to limit the present disclosure.

It should be noted that although functional modules are divided in the schematic diagrams of the apparatus and logical sequences are shown in the flowcharts, in some cases, the steps illustrated or described may be executed in an order different from the module division in the apparatus or the sequence in the flowchart. The terms "first," "second," and the like in the specification, claims, and the above-mentioned drawings are used to distinguish similar objects and are not necessarily used to describe a specific order or sequence.

The flowcharts shown in the drawings are merely illustrative and are not required to include all content and operations/steps, nor are they required to be executed in the described order. For example, some operations/steps may be further decomposed, while others may be combined or partially combined, so the actual execution order may change according to actual circumstances.

The following are the Chinese-English interpretations of the terms involved in the embodiments of the present disclosure:
Non-access stratum, i.e., Non-Access Stratum, abbreviated as NAS.
Protocol data unit, i.e., Protocol Data Unit, abbreviated as PDU.
Media access control-control element, i.e., Media Access Control-Control Element, abbreviated as MAC CE.
Core network, i.e., CoreNetwork, abbreviated as CN.
Base station, i.e., base station.
User equipment specific search space, i.e., UE Specific Search Space, abbreviated as USS.
Buffer status report, i.e., Buffer Status Report, abbreviated as BSR.
Radio network temporary identifier, i.e., RNTI.
Media access control service data unit, i.e., MAC SDU.
Tracking area update, i.e., Tracking Area Update, abbreviated as TAU.
Scheduling request, i.e., Scheduling Request, abbreviated as SR.
Contention-free random access, i.e., Contention-Free Random Access; abbreviated as CFRA .
Physical uplink control channel, i.e., PUCCH.
Physical uplink shared channel, i.e., PUSCH.

It should be noted that with the development of wireless communication technology, a communication system needs to support an increasing number of users and devices simultaneously. In practical applications, there are scenarios involving small data transmission between users and devices, and the increase in small data transmission correspondingly increases the load on the communication system; especially in 6G scenarios, the number of users and devices that can be supported is greater compared to existing wireless communication systems. Although in existing technologies, communication systems have proposed different schemes for small data transmission to balance the load of the communication system-such as using PUR or EDT for small data transmission in NB-IoT and eMTC-both PUR and EDT involve negotiation of the RRC protocol during the transmission process. Specifically, EDT involves the terminal device briefly entering the connected state and then immediately returning to the idle state while RRC is in the idle state, thereby achieving small data transmission without truly establishing an RRC connection. Meanwhile, PUR can only transmit fixed-size data at fixed periods. Furthermore, both PUR and EDT are limited to transmitting only one uplink data packet or one downlink data packet at a time. In the NR system, although small data transmission can also be performed in the RRC_INACTIVE state using CG and RA methods, these approaches still involve RRC messages. Moreover, small data transmission using the CG method is restricted to fixed periods and fixed data volumes. Therefore, in existing technologies, small data transmission techniques still suffer from low transmission efficiency. Based on this, The present disclosure provides a data transmission method, an electronic device, and a storage medium, which can address the issue of low transmission efficiency in small data transmission techniques.

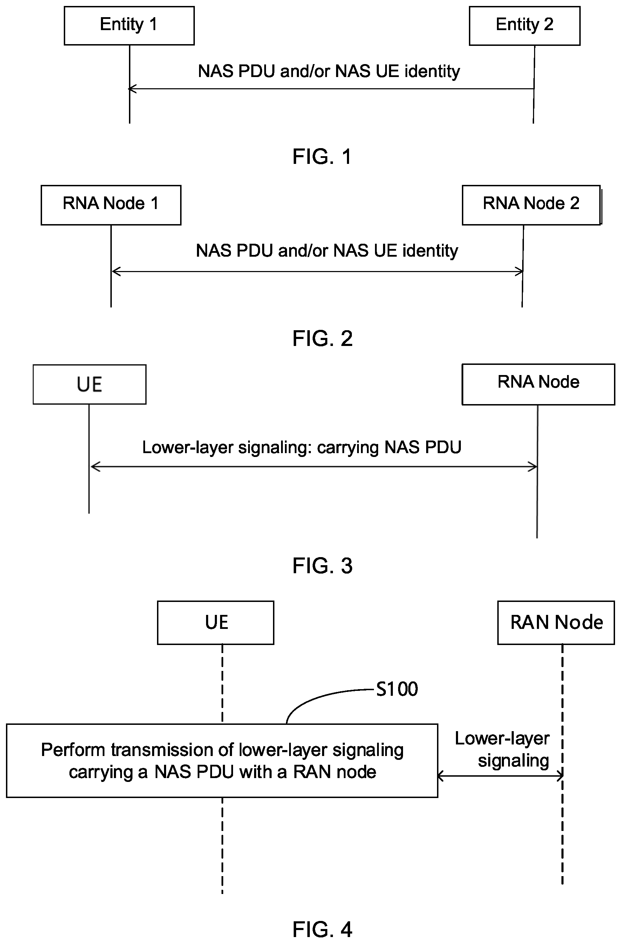

It should be noted that the data transmission method of the present disclosure is applied to a communication system as shown in FIG. 1, where the communication system includes at least two interacting entities, and the interaction between the two entities involves lower-layer signaling carrying NAS PDUs.

FIG. 1 illustrates the process of transmitting NAS PDUs and NAS UE identifiers between Entity 1 and Entity 2. Here, Entity 1 and Entity 2 can be different entities within the UE (such as the MAC layer and the PDCP layer), or they can both be different entities on the network side (such as the MAC layer and the PDCP layer, or the base station's Central Unit (CU) and Distributed Unit (DU), or the base station and the core network). For example, as shown in FIG. 2, where both entities are RAN nodes-Entity 1 and Entity 2 are both RAN nodes (e.g., two RAN nodes such as gNB-CU/gNB-DU, or gNB/CN), referred to as RAN node 1 and RAN node 2-the NAS PDUs are transmitted between RAN node 1 and RAN node 2 via control plane signaling or user plane bearers. Furthermore, for example, as shown in FIG. 3, where the two entities are the UE and the base station, respectively, the NAS PDUs are transmitted between the UE and the base station by carrying the NAS PDUs in lower-layer signaling. Here, MAC layer transmission can be achieved by carrying NAS PDUs in a MAC CE or by using an SRB to carry NAS PDUs, thereby obtaining the corresponding lower-layer signaling.

It should be noted that a communication network can be divided into L1 (physical layer), L2 (data link layer), and L3 (network layer). Among these, the MAC layer, RLC, PDCP, and RRC are all located in the data link layer. Lower-layer signaling refers to signaling at the link transmission layer that can be transparently transmitted. For example, the lower-layer signaling may be a MAC CE. Alternatively, in some embodiments, the lower-layer signaling may be an independent SRB or a protocol-defined default SRB specifically used to carry NAS PDUs. In such cases, the lower-layer signaling does not require PDCP processing or does not pass through PDCP, there is no RLC processing or RLC operates in TM mode, and the NAS PDUs are transparently transmitted. For example, referring to FIGs. 1 and 2, taking the transmission of lower-layer instructions between the MAC layer in the base station and the UE as an example, downlink NAS PDUs are transmitted from the RRC layer/PDCP layer to the MAC layer, or uplink NAS PDUs are transmitted from the MAC layer, etc., to the RRC layer/PDCP layer. That is, NAS PDUs are exchanged within the MAC CE, rather than being transmitted through signaling specific to the UE. Similarly, for the UE, downlink NAS PDUs and/or NAS UE identifiers are transmitted from the MAC layer to the RRC layer/PDCP layer, or uplink NAS PDUs and/or NAS UE identifiers are transmitted from the RRC layer/PDCP layer to the MAC layer. In this case, NAS PDUs and other information are exchanged directly at the MAC layer, rather than being transmitted through signaling specific to the UE. It should be noted that, in some embodiments, when NAS PDUs involve data processing, such as encryption, the NAS PDUs are encrypted by a NAS entity (where the NAS entity may be, for example, a network node in the CN or the UE NAS layer).

Therefore, by carrying NAS PDUs in lower-layer signaling and leveraging lower-layer signaling to enable transparent transmission of NAS PDUs at the data link layer, there is no need for operations related to radio link establishment, release, maintenance, reconfiguration, and so on. This makes the transmission process simpler and capable of transmitting more data, without requiring fixed periodic requirements. Consequently, compared to existing technologies, the embodiments of the present disclosure can address the issue of low transmission efficiency in small data transmission technologies.

Referring to FIG. 4, according to a data transmission method provided by the first aspect of the present disclosure, the method includes the following steps.

At step S100, a UE and a Radio Access Network (RAN) node perform transmission of lower-layer signaling carrying a NAS PDU.

Therefore, by carrying NAS PDUs in lower-layer signaling and leveraging lower-layer signaling to enable transparent transmission of NAS PDUs at the data link layer, there is no need for operations related to radio link establishment, release, maintenance, reconfiguration, and so on. This makes the transmission process simpler and capable of transmitting more data, without requiring fixed periodic requirements. Consequently, compared to existing technologies, the embodiments of the present disclosure can address the issue of low transmission efficiency in small data transmission technologies.

It should be noted that the RAN node may be a base station, a CU of a base station, a DU of a base station, or a CN, among others.

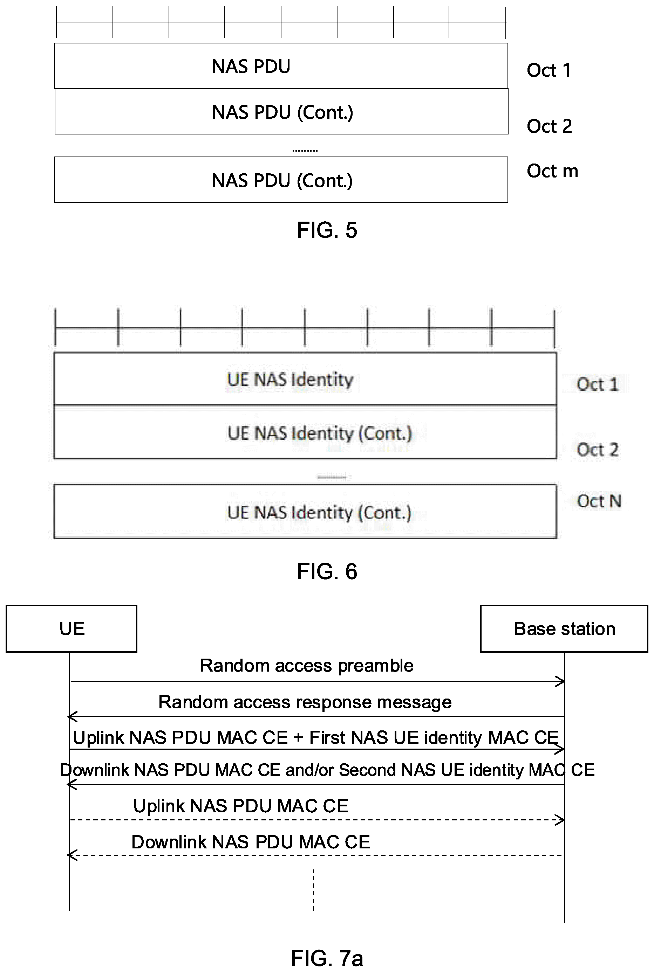

It should be noted that, in some embodiments, the lower-layer signaling is a MAC CE, which is a variable-sized MAC CE containing at least one NAS PDU. When it is a downlink MAC CE, its NAS PDU may originate from the CN. When it is an uplink MAC CE, its NAS PDU originates from the UE. As shown in FIG. 5, a MAC CE contains a NAS PDU occupying a length of m bytes, where Oct1 is the first byte occupied by the corresponding NAS PDU, Oct2 is the second byte occupied by the corresponding NAS PDU (Cont.), ..., and Octm is the m-th byte occupied by the corresponding NAS PDU (Cont.); m is a positive integer, and its value can be selectively set according to actual requirements. In other embodiments, the lower-layer signaling is an SRB, where this SRB is used to carry and transparently transmit the NAS PDU.

It is understandable that the transmission of lower-layer signaling carrying an NAS PDU with the RAN node includes: sending uplink lower-layer signaling carrying the NAS PDU to the RAN node; and/or, receiving downlink lower-layer signaling carrying the NAS PDU sent by the RAN node.

For example, as shown in FIG. 1, when entity 1 is the UE, entity 2 is the RAN node, enabling the UE to receive downlink lower-layer signaling sent by the RAN node; when entity 1 is the RAN node and entity 2 is the UE, the UE sends uplink lower-layer signaling to the RAN node; thereby achieving bidirectional interaction of lower-layer signaling between the two entities.

For example, as shown in FIG. 2, when RAN node 1 is the CU of the base station and RAN node 2 is the DU of the base station, the downlink NAS PDU is sent from the CU to the DU to transmit downlink lower-layer signaling carrying the NAS PDU to the UE; the uplink NAS PDU is sent from the DU to the CU to deliver the NAS PDU carried in the received uplink lower-layer signaling from the UE to the higher layer. When RAN node 1 is the CN, the downlink NAS PDU is sent from the CN to the base station (i.e., RAN node 2) to transmit downlink lower-layer signaling carrying the NAS PDU to the UE; the uplink NAS PDU is sent from the base station to the CN to deliver the NAS PDU carried in the received uplink lower-layer signaling from the UE to the higher layer. Here, the NAS PDU may be included in UE-specific signaling between the base station and the CN or included in a user plane PDU (e.g., identified using a specific GTP-U tunnel or a specific GTP-U header).

It is understandable that the transmission of lower-layer signaling carrying a NAS PDU with the RAN node includes: sending first uplink lower-layer signaling carrying a first NAS UE identity to the RAN node; receiving first downlink lower-layer signaling carrying a second NAS UE identity sent by the RAN node; in a case where the first NAS UE identity matches the second NAS UE identity, sending second uplink lower-layer signaling carrying the NAS PDU to the RAN node and/or receiving second downlink lower-layer signaling carrying the NAS PDU sent by the RAN node, until a preset condition is met.

It should be noted that, in some embodiments, the NAS UE identifier is exchanged through lower-layer signaling to identify the device information of the ready sender or to identify specific sender information. For example, taking the interaction between the RAN node and the UE as an example, by sending the first NAS UE identity to the RAN, it informs the RAN node that the next second lower-layer signaling to be sent is from the UE corresponding to this first NAS UE identity. Correspondingly, the RAN node uses the second NAS UE identity to inform the UE of the UE information that is ready to receive lower-layer signaling. For example, as shown in FIG. 6, before the first transmission of a MAC CE carrying the NAS PDU or when the UE receives a message indicating downlink NAS PDU transmission, it first transmits first uplink lower-layer signaling carrying the first NAS UE identity. Taking the length of the first NAS UE identity as N bytes as an example, as shown in FIG. 6, N bytes are allocated in the MAC CE to store this first NAS UE identity. Here, Oct1 is the first byte of the UE NAS Identity, Oct2 is the second byte of the UE NAS Identity, ..., and Oct N is the Nth byte of the UE NAS Identity. N can be selectively set according to actual requirements.

It should be noted that the preset condition is the criterion for stopping the exchange of lower-layer signaling and can be set as a fixed time interval, etc. Those skilled in the art can selectively configure the preset condition based on actual requirements.

It can be understood that whether the first NAS UE identity and the second NAS UE identity match is determined through one of the following steps:
- If the first NAS UE identity is the same as the second NAS UE identity, it is determined that the first NAS UE identity and the second NAS UE identity match; or,
- If the second NAS UE identity is the same as a segment of the first NAS UE identity, it is determined that the first NAS UE identity and the second NAS UE identity match.

It should be noted that by using the condition that the first NAS UE identity is the same as the second NAS UE identity as the matching criterion, strong validation can be performed, thereby enhancing security. By using the condition that the second NAS UE identity is the same as a segment of the first NAS UE identity as the matching criterion, the efficiency of validation can be improved.

For example, the second NAS UE identity may be the minimum M bits or the rightmost M bits of the first NAS UE identity that can be used to determine whether the NAS UE identity matches, where M is an integer.

It is understandable that the first uplink lower-layer signaling carries the NAS PDU.

It should be noted that, as shown in FIGs. 1 and 3, the NAS PDU and the first NAS UE identity can be transmitted in the same lower-layer signaling.

It is understandable that the first uplink lower-layer signaling includes one or more uplink lower-layer signalings. For example, the NAS PDU and the first NAS UE identity are carried by one uplink lower-layer signaling, or the NAS PDU and the first NAS UE identity are carried by different uplink lower-layer signalings.

It should be noted that, as shown in FIGs. 1 and 3, the NAS PDU and the first NAS UE identity can also be transmitted in two different MAC CEs. The two MAC CEs are transmitted to the RAN node simultaneously.

It should be noted that each uplink lower-layer signaling corresponds to one MAC CE.

It is understandable that the first downlink lower-layer signaling carries the NAS PDU.

It should be noted that, as shown in FIGs. 1 and 2, the NAS PDU and the second NAS UE identity can be transmitted in the same MAC CE. In this case, the first downlink lower-layer signaling carries the NAS PDU.

It is understandable that the first downlink lower-layer signaling includes one or more downlink lower-layer signalings. For example, the NAS PDU and the second NAS UE identity are carried by one downlink lower-layer signaling, or the NAS PDU and the first NAS UE identity are carried by different downlink lower-layer signalings.

It should be noted that, as shown in FIGs. 1 and 3, the NAS PDU and the second NAS UE identity can be transmitted in different MAC CEs. In this case, the first downlink lower-layer signaling includes multiple downlink lower-layer signalings, where at least one downlink lower-layer signaling carries the NAS PDU, and one downlink lower-layer signaling carries the second NAS UE identity.

It is understandable that the preset condition includes: the timer count exceeds the deadline. The starting point or restarting point of the timer count is one of the following starting points: the UE transmits the NAS PDU, or the UE receives the NAS PDU, or the UE receives the uplink grant, or the UE receives the downlink grant.

In some embodiments, the timer is configured by the RAN node.

It is understandable that the preset condition includes: receiving a data transmission completion indication sent by the RAN node.

It should be noted that when determining that MAC CE interaction needs to be stopped, the RAN node sends a data transmission completion indication to the UE to inform the UE that the transmission is complete.

It should be noted that, in some embodiments, before receiving the data transmission completion indication sent by the RAN node, a no-uplink-data indication (e.g., reporting a buffer size of 0) from the RAN node may also be received.

It is understandable that before sending the first uplink lower-layer signaling carrying the first NAS UE identity to the RAN node, the method further includes: sending a preamble message to the RAN node; receiving a response message sent by the RAN node based on the preamble message, where the response message is used to instruct the UE to send the first uplink lower-layer signaling carrying the first NAS UE identity, and/or to indicate resources allocated by the RAN node for the UE to send the first uplink lower-layer signaling carrying the first NAS UE identity in response to the preamble message.

It should be noted that, as shown in FIGs. 7a to 7d, taking the RAN node as a base station as an example, the UE sends a preamble message to the RAN node, and the base station sends a response message corresponding to the preamble message to the UE, thereby implementing the access procedure.

It is understandable that before sending the preamble message to the RAN node, the method further includes: receiving a random access preamble transmission indication message or a paging message carrying a random access preamble transmission indication sent by the RAN node, where the random access preamble transmission indication message or the paging message carrying the preamble transmission indication is used to instruct the UE to send the preamble message.

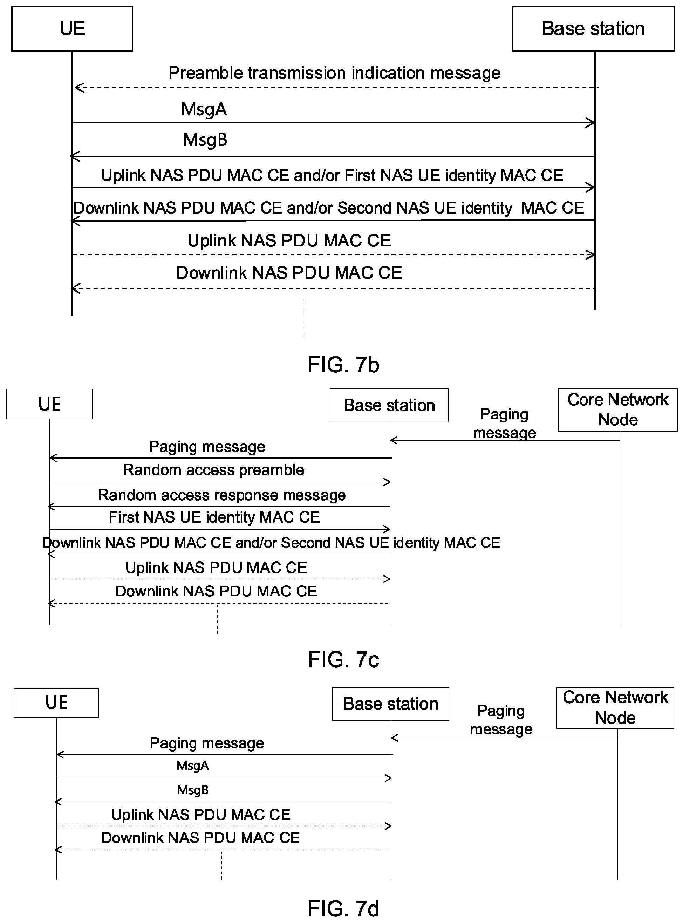

It should be noted that, as shown in FIGs. 7b to 7d, in some scenarios, as illustrated in FIG. 7b, before sending the preamble message (corresponding to "MsgA" shown in FIG. 7b) to the RAN node, a preamble transmission indication message sent by the RAN node is received. In other embodiments, as shown in FIGs. 7c and 7d, before sending the preamble message to the RAN node (where in FIG. 7c, the preamble message includes a "random access preamble" and a "first NAS identity MAC CE"; in FIG. 7d, the preamble message is "MsgA"), a paging message carrying a preamble transmission indication sent by the RAN node is received.

It is understandable that the preamble message includes at least one of the following:
- a random access preamble;
- uplink lower-layer signaling carrying a NAS PDU;
- uplink lower-layer signaling carrying a first NAS UE identity.

For example, as shown in FIG. 7a, in some embodiments, taking the RAN node as a base station as an example, the UE sends a random access preamble to the base station; and according to the random access response message fed back by the base station, correspondingly sends uplink lower-layer signaling (i.e., the uplink NAS PDU MAC CE and the first NAS UE identity MAC CE in FIG. 7a) to the base station, thereby completing the transmission of the preamble message; where, the uplink NAS PDU MAC CE is lower-layer signaling carrying a NAS PDU; the first NAS UE identity MAC CE is lower-layer signaling carrying a first NAS UE identity.

It should be noted that the random access preamble, the uplink lower-layer signaling carrying the NAS PDU, and the uplink lower-layer signaling carrying the first NAS UE identity can each be carried and transmitted by a separate MAC CE; in some embodiments, the NAS PDU and the first NAS UE identity may also be carried and transmitted by a single MAC CE.

It should be noted that the preamble code is a non-mandatory parameter in the preamble message, which can be selectively set according to actual requirements or determined through negotiation between the RAN node and the UE. The preamble message can also simultaneously include both the uplink lower-layer signaling carrying the NAS PDU and the uplink lower-layer signaling carrying the first NAS UE identity; in some embodiments, the preamble message does not contain the uplink lower-layer signaling carrying the NAS PDU.

It is understandable that the response message includes at least one of the following:
- Random Access Response Information;
- downlink lower-layer signaling carrying a NAS PDU;
- downlink lower-layer signaling carrying a second NAS UE identity.

It should be noted that if the UE does not send a preamble code, a response message is not required. When the UE's preamble message does not contain uplink lower-layer signaling with a NAS PDU, the response message also does not contain downlink signaling instructions with a NAS PDU.

For example, as shown in FIG. 7a, in some embodiments, taking the RAN node as a base station as an example, the UE sends a random access preamble to the base station; the base station feeds back Random Access Response Information to the UE, the UE sends uplink lower-layer signaling carrying a first NAS UE identity (i.e., the "first NAS UE identity MAC CE" in FIG. 7a) to the base station, and the base station sends downlink lower-layer signaling carrying a NAS PDU (i.e., the "downlink NAS PDU MAC CE and/or second NAS UE identity MAC CE" in FIG. 7a) back to the UE. At this point, the UE completes sending the preamble message to the RAN node; the base station completes receiving the response message sent by the RAN node based on the preamble message. In other embodiments, after successfully completing the random access procedure, as shown in FIGs. 7a to 7d, the UE will continue to send uplink lower-layer signaling (i.e., the "uplink NAS PDU MAC CE" in FIGs. 7a to 7d) to the base station and continuously receive downlink lower-layer signaling from the base station (i.e., the "downlink NAS PDU MAC CE" in FIGs. 7a to 7d) until no downlink lower-layer signaling is received or no uplink lower-layer signaling needs to be transmitted.

It should be noted that for MsgA and MsgB shown in FIGs. 7b and 7d, MsgA includes at least a MAC CE carrying the first NAS UE identity, where the first NAS UE identity can be S-TMSI; if there is an uplink NAS PDU to be transmitted, MsgA also includes a MAC CE carrying the NAS PDU. In some embodiments, if there is a random access preamble to be sent, MsgA also includes the MAC CE corresponding to the random access preamble. For the UE, the NAS PDU and the first NAS UE identity can be transmitted to the base station within the same MAC CE, or they can be carried in different MAC CEs and transmitted to the base station separately. Similarly, for MsgB; MsgB includes at least a MAC CE carrying the second NAS UE identity; if the MsgA sent by the UE includes a random access preamble, then MsgB also correspondingly includes a random access response message. In some embodiments, MsgB also includes a MAC CE carrying the NAS PDU. In this case, for the base station, the NAS PDU and the second NAS UE identity can be transmitted to the UE within the same MAC CE, or they can be transmitted to the UE in two different MAC CEs.

For example, as shown in FIG. 7b, the base station sends a preamble transmission indication message to the UE to indicate whether the cell where the UE is located needs to perform preamble message transmission. The UE sends a preamble message (corresponding to "MsgA") to the base station. After receiving the preamble message, the base station sends a response message (corresponding to "MsgB") to the UE. After receiving the response message, the UE sends uplink lower-layer signaling (corresponding to "uplink NAS PDU MAC CE and/or first NAS UE identity MAC CE" in the figure) to the base station. The base station receives the uplink lower-layer signaling and sends downlink lower-layer signaling (corresponding to "downlink NAS PDU MAC CE and/or second NAS UE identity MAC CE" in the figure) to the UE, so that the UE can determine whether the random access procedure is completed. Whether the preamble message includes a random access preamble can be confirmed based on the preamble transmission indication message. The setting of the random access preamble can be selectively configured according to actual needs, such as the base station determining whether a random access preamble is needed based on the PUSCH CP length and cell coverage. For example, when the cell coverage is less than 200 km, the RTT between the UE and the base station is less than one TA (Timing Advance) granularity of 15 kHz SCS; thus, when the cell coverage is less than 200 km and the cell is configured with 15 kHz SCS, no random access preamble is required. It should be noted that, in some embodiments, the preamble transmission indication message is also configured via OAM. In some embodiments, when the base station does not indicate that random access preamble transmission is unnecessary, the preamble information also includes a random access preamble. That is, in some embodiments, the preamble information includes the random access preamble and the first NAS UE identity; or the random access preamble, the first NAS UE identity, and the NAS PDU; or uplink lower-layer signaling composed of the random access preamble and the first NAS UE identity and another uplink lower-layer signaling composed of the NAS PDU. Correspondingly, the response message is configured based on the preamble information. In this regard, the embodiments of the present disclosure do not provide excessive detailed description. It should be noted that, as shown in FIG. 7b, when the UE receives the "downlink NAS PDU MAC CE and/or second NAS UE identity MAC CE" from the base station (in correspondence as after the third step of downlink lower-layer signaling transmission performed by the base station to the UE in FIG. 7b), it indicates that the UE confirms successful NAS access. At this point, the UE and the base station can normally exchange NAS PDUs.

It should be noted that, as shown in FIG. 7b, after the UE and the base station confirm successful random access, the UE can continuously receive downlink lower-layer instructions carrying NAS PDUs or transmit uplink lower-layer instructions carrying NAS PDUs. Here, the UE can determine whether to continue sending uplink lower-layer signaling or receiving downlink lower-layer signaling based on a timer set in preset conditions or an indication of data transmission completion sent by the base station. In some embodiments, the timer is configured by the base station. The timer is started or restarted when the base station confirms that the UE has transmitted an uplink NAS PDU, or when the UE has received a downlink NAS PDU. Alternatively, the timer is started or restarted when the UE confirms that it has received a PDCCH carrying an uplink grant or a downlink grant after receiving the response message. For example, the timer is not started or restarted when the UE transmits a preamble or receives the response message.

It should be noted that, regarding the first NAS UE identity and the second NAS UE identity in FIG. 7b, in some embodiments, the first NAS UE identity and the second NAS UE identity are the same. In other embodiments, the second NAS UE identity is a truncated part of the first NAS UE identity, such as the truncated part being the minimum number of M bits used for identification in the first NAS UE identity, or the M bits of data on the far right, where M is an integer.

For example, as shown in FIG. 7c, taking an application scenario where downlink lower-layer signaling is transmitted to the base station via the CN, and then the base station sends downlink lower-layer signaling to the UE as an example, the CN sends a paging message containing a NAS PDU to the base station. Here, the NAS PDU transmission indication can be a NAS encryption indication to encrypt the NAS PDU, and to allow the UE to identify whether transmission via lower-layer signaling is possible. Then, the base station sends the paging message to the UE. The UE sends a preamble to the base station, and the base station sends a response message corresponding to the preamble to the UE. After receiving the response message, the UE sends a MAC CE corresponding to the first NAS UE identity (such as S-TMSI) to the base station. In some scenarios (e.g., when sufficient uplink resources are available to carry both the first NAS identity and the NAS PDU simultaneously), the same MAC CE also carries the NAS PDU. Correspondingly, the base station sends downlink lower-layer signaling to the UE, which carries at least the second NAS UE identity. Here, the first NAS UE identity and the second NAS UE identity are the same. In other embodiments, the second NAS UE identity is a truncated part of the first NAS UE identity, such as the truncated part being the minimum number of M bits used for identification in the first NAS UE identity, or the M bits of data on the far right, where M is an integer. In some embodiments, the downlink lower-layer signaling also carries a NAS PDU. When the UE successfully matches the second NAS UE identity with the first NAS UE ID, the MT procedure succeeds. After confirming the success of the MT procedure between the UE and the base station, the UE can continue to receive downlink lower-layer instructions carrying NAS PDUs or transmit uplink lower-layer instructions carrying NAS PDUs. Here, the UE may determine whether to continue sending uplink lower-layer signaling or receiving downlink lower-layer signaling based on a timer set in preset conditions or an indication from the base station that data transmission is complete. In some embodiments, the timer is configured by the base station. The timer is started or restarted when the base station confirms that the UE has sent an uplink NAS PDU or when the UE receives a downlink NAS PDU. Alternatively, the timer is started or restarted when the UE confirms that it has received a PDCCH carrying an uplink grant or downlink grant after receiving the response message. For example, the timer is not started or restarted when the UE transmits a preamble or receives the response message.

It should be noted that, in some embodiments, the paging message does not contain a NAS PDU transmission indication, but the UE already possesses the information included in the NAS PDU transmission indication. For example, if the NAS PDU transmission indication is a NAS cipher key, when the UE already possesses the NAS cipher key, the UE will directly send uplink lower-layer instructions upon receiving the paging message from the base station. In this case, the uplink lower-layer instructions may include the first NAS UE identity, or both the first NAS UE identity and the NAS PDU.

For example, referring to FIG. 7d, where a two-step Random Access Channel (RACH) is used to transmit MAC CE during the MT negotiation process and the NAS PDU transmission indication is the NAS cipher key, when the CN sends a paging message carrying a NAS PDU to the base station, the base station sends a paging message carrying the NAS PDU to the UE.

It can be understood that the preamble transmission indication message or the paging message carrying the preamble transmission indication carries the NAS cipher key, which is used for NAS PDU encryption and/or implicitly indicates whether the UE is allowed to send uplink lower-layer signaling carrying NAS PDU, or indicates the permission or capability to send uplink lower-layer signaling carrying NAS PDU.

It can be understood that, before transmitting lower-layer signaling carrying NAS PDU with the RAN node, the method further includes: negotiating a NAS cipher key with a Core Network Node, to determine whether to allow transmitting uplink lower-layer signaling carrying a NAS PDU, or to obtain permission or capability to transmit uplink lower-layer signaling carrying a NAS PDU.

It can be understood that the method further includes:
- renegotiating the NAS cipher key with the Core Network Node through a Tracking Area Update (TAU) procedure; or,
- obtaining an updated NAS cipher key from the Core Network Node through a TAU procedure; or,
- renegotiating the NAS cipher key with the Core Network Node through a NAS PDU; or,
- obtaining an updated NAS cipher key from the Core Network Node through a NAS PDU.

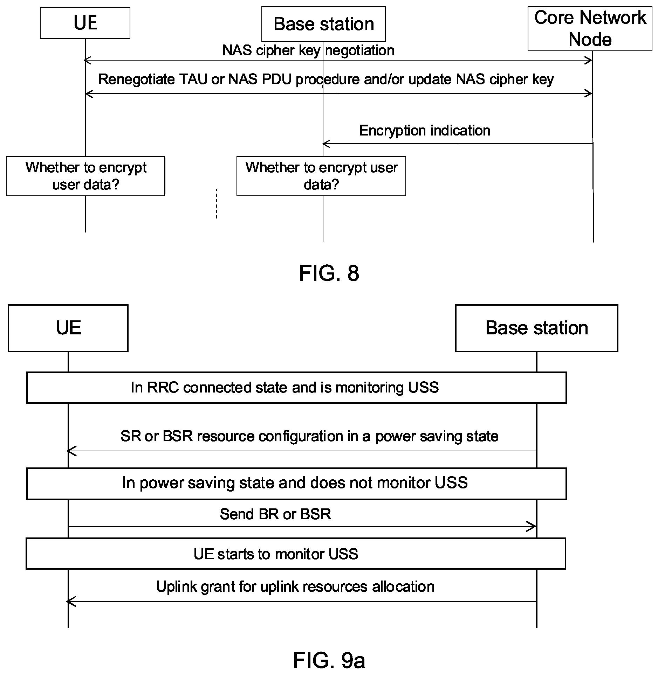

For example, as shown in FIG. 8, the UE and the CN negotiate the NAS cipher key during the initial attach procedure or the registration procedure. The UE and the CN may also renegotiate or update the NAS cipher key during a TAU procedure or in the process of NAS PDU transmission. Only when the UE stores the NAS cipher key can the UE include NAS data in a NAS PDU or transmit the NAS PDU via lower-layer signaling, thereby realizing the process of transmitting NAS data through the MAC CE as shown in FIGs. 1 to 4 and FIGs. 7a to 7d.

It is understandable that the lower-layer signaling includes: a MAC CE; and/or, a specific Signaling Radio Bearer (SRB).

It should be noted that both the MAC CE and the SRB can be transmitted at the MAC layer, thereby enabling the transmission of NAS PDUs at the MAC layer. This allows bypassing operations related to radio link connection, thus achieving power saving.

It is understandable that the method further includes:
- while in an RRC connected state and monitoring the UE-specific search space (USS), receiving scheduling request (SR) resource configuration or buffer status report (BSR) resource configuration in a power saving state from the RAN node, thereby obtaining preconfigured SR resources or BSR resources;
- while in the power saving state, resources for transmitting small data packets are acquired through the preconfigured SR resources or BSR resources.

It should be noted that when transmitting small data packets (i.e., NAS PDUs) via SR resources or BSR resources, the SRB has no PDCP processing or the PDCP merely transparently transmits the NAS information; there is no RLC processing or the RLC operates in TM mode, but there is an LCH ID used to identify the SRB. Therefore, the SRB seen at the MAC layer is a regular SDU.

Exemplarily, as shown in FIG. 9a, which illustrates the procedure for a UE to use preconfigured resources for SR and BSR transmission in the power saving state, when the UE is in the normal RRC connected state and is monitoring the USS (where the USS is, for example, the UE-specific PDCCH), the base station sends an SR or BSR resource configuration. The SR or BSR resource configuration is transmitted during the RRC connection setup phase, the RRC connection reconfiguration phase, or the RRC connection release phase. The SR and BSR resource configurations are UE-specific uplink configuration resources, including CFRA resources for SR, PUCCH, PUSCH, and uplink signaling; as well as PUCCH, PUSCH, and uplink signaling for BSR. When configuring SR or BSR resources, the time domain information for the SR or BSR resource configuration must also be configured. The time domain information includes at least one of the following: the start time of the SR or BSR resources, the period of the SR or BSR resources, the end time of the SR or BSR resources, or a timer which determines the end time of the SR or BSR resources. When SR and BSR resource configurations are used while the UE is in the power saving state, the USS also needs to be configured. Once the USS configuration is complete, the UE sends a BR or SR to the base station, starts the PDCCH monitoring timer, and stops monitoring the PDCCH after the PDCCH monitoring timer expires (corresponding to the UE starting to monitor the PDCCH in FIG. 9a). In some embodiments, as shown in FIG. 9a, after an uplink grant or downlink grant is transmitted via the PDCCH, the PDCCH monitoring timer is restarted. When SR or BSR resource configuration is completed in the power saving state, a UE-specific RNTI is also configured to identify the UE by the base station or to identify the UE-specific PDCCH by the UE.

It should be understood that SR resources include at least one of the following: CFRA resources for SR, PUCCH resources for SR, uplink signaling for SR, and PUSCH resources for SR.

BSR resources include at least one of the following: PUCCH resources for BSR, uplink signaling for BSR, and PUSCH resources for BSR.

For example, as shown in FIG. 9a, during SR resource configuration, one or more of the CFRA resources, PUCCH resources, uplink signaling, and PUSCH resources can be selectively configured. For instance, only CFRA resources may be configured, or PUCCH resources, uplink signaling, and PUSCH resources may be configured simultaneously, etc. Those skilled in the art can selectively choose one or more resources for configuration based on actual requirements.

For example, as shown in FIG. 9a, during BSR resource configuration, one or more of the PUCCH resources, uplink signaling, and PUSCH resources can be selectively configured. For instance, only PUCCH resources may be configured, or uplink signaling and PUSCH resources may be configured simultaneously, etc. Those skilled in the art can selectively choose one or more resources to configure the BSR resource configuration based on actual requirements.

It should be understood that the method further includes:
While in the RRC connected state and monitoring the USS, time domain information for SR resource configuration or BSR resource configuration is also received from the RAN node, where the time domain information includes at least one of the following: the start time of the SR or BSR resources, the period of the SR or BSR resources, the end time of the SR or BSR resources, and a timer which determines the end time of the SR or BSR resources.

It should be noted that the timer is triggered to start at the start time of the SR or BSR resources. Timer expiration indicates that the end time of the BR or BSR resources has been reached. Between the start time and the end time of the SR or BSR resources, corresponding BR or BSR resources are generated periodically. The period of the SR or BSR resources determines the time interval at which the corresponding SR or BSR resources are generated.

It should be understood that the method further includes: while in the RRC connected state and monitoring the USS, USS configuration in the power saving state and/or specific RNTI configuration from the RAN node are also received.

It should be noted that by setting the RNTI, it can be distinguished whether the UE is identified by the base station or the UE-specific PDCCH is identified by the UE.

It should be understood that the method further includes: while in the power saving state, receiving downlink data and/or downlink signaling transmitted by the RAN node via a downlink grant, where the downlink signaling is used for at least one of the following:
- Radio resource configuration/reconfiguration for the RRC connected state, where the radio resource configuration/reconfiguration includes: USS configuration and/or specific RNTI configuration for the UE in the RRC connected state;
- triggering the UE to switch from the power saving state to the RRC connected state.

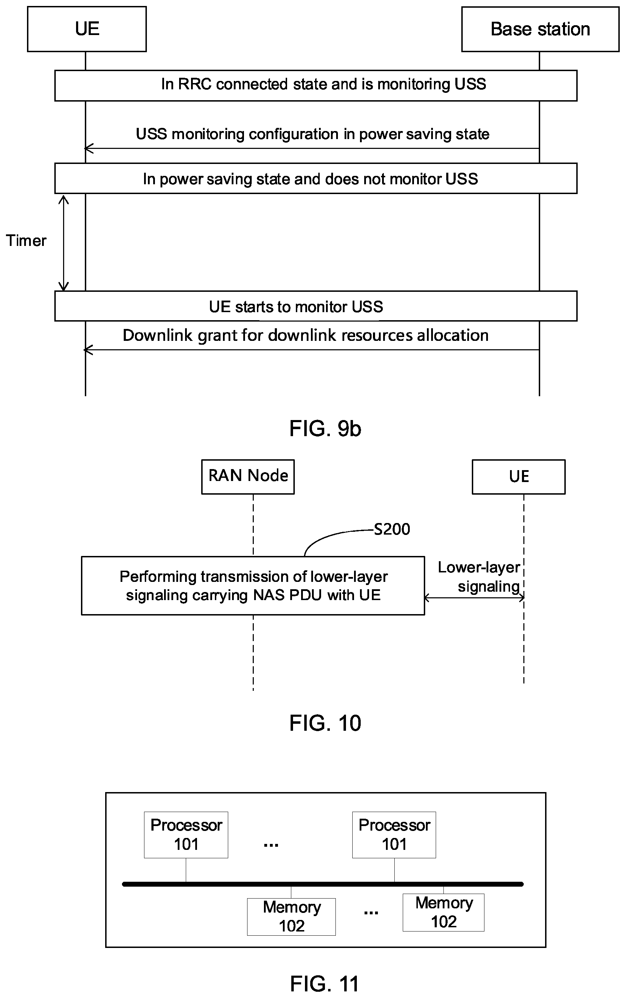

Illustratively, referring to FIG. 9b, FIG. 9b is a schematic diagram of the process for performing small data transmission using preconfigured resources in the power saving state. As shown in FIG. 9b, when the UE is in the normal RRC connected state and is monitoring the USS (such as the UE-specific PDCCH), the base station initiates USS monitoring configuration to the UE in the power saving state. The USS monitoring configuration can be sent to the UE via MAC CE or included in UE-specific RRC signaling during the RRC connection setup phase, RRC connection reconfiguration phase, or RRC connection release phase. The USS configuration includes at least one of the following: time domain information for USS monitoring, PDCCH frequency location (DARFCH) or frequency bandwidth, PDCCH monitoring interval, PDCCH monitoring duration, or a timer. The time domain information includes at least one of the following: a start time of the USS power saving state, an end time of the USS power saving state, or a timer which determines the end time of the UE power saving state (e.g., a timer starting from the start time of the UE power saving state, where the expiration time of the timer is the end time of the USS power saving state). The UE begins monitoring PDCCH according to the USS configuration and starts a PDCCH monitoring timer (or monitors PDCCH within a maximum PDCCH monitoring period); the PDCCH monitoring for the power saving state ends when the PDCCH monitoring timer expires. In some embodiments, the PDCCH monitoring timer may be restarted upon receiving an uplink grant or a downlink grant via PDCCH. It should be noted that when the base station sends the USS monitoring configuration to the UE, a UE power saving state-specific RNTI is also configured, which is used by the base station to identify the UE or by the UE to identify the UE-specific PDCCH. It should be noted that, as shown in FIG. 9b, under the power saving state, a downlink grant can be used for downlink data transmission or downlink signaling transmission. Here, the downlink signaling can be used to configure/reconfigure radio resources and trigger the UE to switch from the power saving state to the RRC connected state. The radio resource configuration/reconfiguration includes at least one of the USS configuration for the UE in the RRC connected state and the specific RNTI configuration.

Referring to FIG. 10, a data transmission method according to the second aspect of the present disclosure is provided, applied to a RAN node. The method includes the following steps.

At step S200, lower-layer signaling carrying a NAS PDU is transmitted with a user equipment (UE).

By carrying the NAS PDU in the lower-layer signaling, the NAS PDU can be transparently transmitted at the data link layer via the lower-layer signaling, eliminating the need for operations such as establishment, release, maintenance, and reconfiguration of radio links. This makes the transmission process simpler, capable of transmitting more data, and does not require fixed periodic requirements. Therefore, compared with existing technologies, the embodiments of the present disclosure can solve the problem of low transmission efficiency in small data transmission techniques.

It is understandable that transmitting lower-layer signaling carrying a NAS PDU with a user equipment (UE) includes:
- Receiving uplink lower-layer signaling carrying a NAS PDU sent by the UE; and/or,
- Sending downlink lower-layer signaling carrying the NAS PDU to the UE.

For example, as shown in FIGs. 7a-7d, taking the RAN node as a base station as an example, the RAN node receives uplink lower-layer signaling carrying a NAS PDU sent by the UE. The base station sends downlink lower-layer signaling carrying a NAS PDU to the UE.

It is understandable that transmitting lower-layer signaling carrying a NAS PDU with a user equipment (UE) includes:
- Receiving first uplink lower-layer signaling carrying a first NAS UE identity sent by the UE;
- Sending first downlink lower-layer signaling carrying a second NAS UE identity to the UE according to the first uplink lower-layer signaling, where the second NAS UE identity is the same as the first NAS UE identity, or the second NAS UE identity is the same as a segment of the first NAS UE identity.

It should be noted that, as shown in FIGs. 5 and 6, FIGs. 1 and 2, taking the transmission of lower-layer signaling through the MAC layer as an example, when the UE transmits the NAS PDU MAC CE for the first time, the UE sends the first uplink lower-layer signaling carrying the first NAS UE identity, enabling the base station to identify which UE sent the uplink lower-layer signaling through the first NAS UE identity, or when the UE receives a paging message with a downlink transmission indication or a preamble transmission indication message, the first NAS UE identity enables the base station to identify which UE is ready to receive downlink lower-layer signaling.

It should be noted that the second NAS UE identity being the same as a segment of the first NAS UE identity indicates partial identical. The second NAS UE identity may be bit data of partial bits in the first NAS UE identity, where the bit data may be M consecutive bits or the minimum number of bits that can distinguish different first NAS UE identities.

It is understandable that the first uplink lower-layer signaling includes one or more uplink lower-layer signaling. The NAS PDU and the first NAS UE identity are carried by a single uplink lower-layer signaling, or the NAS PDU and the first NAS UE identity are carried by different uplink lower-layer signaling.

It should be noted that uplink lower-layer signaling refers to lower-layer signaling transmitted in the uplink direction.

It should be noted that for the UE, the first NAS UE identity and the NAS PDU may be sent via a single lower-layer signaling or encapsulated into different lower-layer signaling for transmission. Therefore, the first uplink lower-layer signaling includes at least one uplink lower-layer signaling.

It is understandable that the first downlink lower-layer signaling carries the NAS PDU.

It is understandable that the first downlink lower-layer signaling includes one or more downlink lower-layer signaling. The NAS PDU and the second NAS UE identity are carried by a single downlink lower-layer signaling, or the NAS PDU and the first NAS UE identity are carried by different downlink lower-layer signaling.

It should be noted that downlink lower-layer signaling refers to lower-layer signaling transmitted in the downlink direction.

It should be noted that for the RAN node, the second NAS UE identity and the NAS PDU may similarly be sent via a single lower-layer signaling or encapsulated into different lower-layer signaling for transmission. Therefore, the first downlink lower-layer signaling includes at least one downlink lower-layer signaling.

It is understandable that before receiving the first uplink lower-layer signaling carrying the first NAS UE identity sent by the UE, the method further includes:
- Sending a configuration of a timer to the UE, so that the UE, based on the timer configuration, stops sending the second uplink lower-layer signaling carrying the NAS PDU and/or stops receiving the second downlink lower-layer signaling carrying the NAS PDU when the timer exceeds the deadline.
- Sending a data transmission completion indication to the UE, so that the UE stops sending the second uplink lower-layer signaling carrying the NAS PDU and/or stops receiving the second downlink lower-layer signaling carrying the NAS PDU based on the data transmission completion indication.

It is understandable that before receiving the first uplink lower-layer signaling carrying the first NAS UE identity sent by the UE, the method further includes:
- Receiving a preamble message sent by the UE;
- Sending a response message to the UE based on the preamble message, where the response message is used to instruct the UE to send the first uplink lower-layer signaling carrying the first NAS UE identity.

For example, as shown in FIGs. 7a to 7d, in some embodiments, taking the RAN node as a base station as an example, the UE sends a preamble message to the base station; the base station sends a response message to the UE, thereby completing the access procedure. After completing the access procedure, the UE sends uplink lower-layer signaling carrying the NAS PDU to the base station, and the base station sends downlink lower-layer signaling to the UE to achieve small data transmission between the UE and the base station.

It is understandable that before receiving the preamble message sent by the RAN node, the method further includes: sending a preamble transmission indication message or a paging message carrying a preamble transmission indication to the UE, where the preamble transmission indication message or the paging message carrying the preamble transmission indication is used to instruct the UE to send a preamble message.

For example, as shown in FIG. 7b, the base station sends a preamble transmission indication message to the UE to instruct the UE to send a preamble message. After receiving the preamble transmission indication message, the UE sends a preamble message to the base station. Correspondingly, the base station sends a response message to the UE. After receiving the response message, the UE sends uplink lower-layer signaling (which at least includes the first NAS UE identity; in some embodiments, it includes the first NAS UE identity and the NAS PDU). The base station receives the second first NAS UE identity and sends downlink lower-layer signaling to the UE. At this point, the UE determines whether the random access procedure is successfully completed and whether contention resolution is successful based on the received downlink lower-layer signaling.

For example, as shown in FIGs. 7c and 7d, a paging message is sent to the UE to instruct the UE to send a preamble message. After receiving the paging message, in some embodiments, as shown in FIG. 7c, the UE sends a random access preamble to the base station. The base station feeds back a random access response message corresponding to the random access preamble. After receiving the corresponding random access response message, the UE sends the first NAS UE identity. The base station feeds back downlink lower-layer signaling based on the first NAS UE identity (which at least includes the second NAS UE identity; in some embodiments, the downlink lower-layer signaling includes the second NAS UE identity and the NAS PDU). At this point, after receiving the downlink lower-layer signaling, the UE confirms that the procedure is successfully completed and contention resolution is successful. In other embodiments, as shown in FIG. 7d, after receiving the paging message, the UE directly sends MsgA (where MsgA at least includes the first NAS UE identity; in some embodiments, MsgA includes the first NAS UE identity and the NAS PDU). After receiving MsgA, the base station feeds back the corresponding MsgB. At this point, the UE determines whether the access procedure is successfully completed and whether contention resolution is successful based on MsgB.

It is understandable that the preamble message includes at least one of the following:
- a random access preamble;
- uplink lower-layer signaling carrying a NAS PDU;
- uplink lower-layer signaling carrying a first NAS UE identity.

It should be noted that, in some embodiments, as shown in FIG. 7a, the preamble message includes a random access preamble, uplink lower-layer signaling carrying a NAS PDU, and uplink lower-layer signaling carrying the first NAS UE identity; in other embodiments, as shown in FIG. 7c, the preamble message includes a random access preamble and uplink lower-layer signaling carrying the first NAS UE identity; in other embodiments, as shown in FIG. 7d, the preamble message includes uplink lower-layer signaling carrying the first NAS UE identity, or uplink lower-layer signaling carrying the first NAS UE identity and a NAS PDU.

It is understandable that the response message includes at least one of the following:
- Random Access Response Information;
- downlink lower-layer signaling carrying a NAS PDU;
- downlink lower-layer signaling carrying a second NAS UE identity.

It should be noted that, in some embodiments, as shown in FIG. 7a, the response message includes a random access response message, downlink lower-layer signaling carrying a NAS PDU, and downlink lower-layer signaling carrying the second NAS UE identity; in other embodiments, as shown in FIG. 7c, the response message includes a random access response message and downlink lower-layer signaling carrying the second NAS UE identity; in other embodiments, as shown in FIG. 7d, the response message includes downlink lower-layer signaling carrying the second NAS UE identity, or downlink lower-layer signaling carrying the second NAS UE identity and a NAS PDU.

It is understandable that the preamble transmission indication message or a Paging Message carrying a random access preamble transmission indication carries a NAS cipher key, where the NAS cipher key is used for NAS PDU encryption and/or implicitly indicates whether the UE is allowed to send uplink lower-layer signaling carrying a NAS PDU, or the permission or capability to send uplink lower-layer signaling carrying a NAS PDU.

It is understandable that, before receiving the preamble message sent by the UE, the method further includes:
- receiving a Paging Message carrying a downlink NAS PDU transmission indication sent by a Core Network Node, where the downlink NAS PDU transmission indication may also be a NAS cipher key;
- forwarding the Paging Message carrying the downlink NAS PDU transmission indication to the UE.

Exemplarily, as shown in FIG. 7c and FIG. 7d, the Paging Message carrying the downlink NAS PDU transmission indication sent by the Core Network Node is sent by the base station to the UE for the MT procedure.

The method further includes: receiving third downlink lower-layer signaling carrying a NAS PDU sent by the Core Network Node.

The lower-layer signaling includes: a Media Access Control Control Element (MAC CE) of a Media Access Control unit; and/or, a specific Signaling Radio Bearer (SRB).

It should be noted that after receiving the third downlink lower-layer signaling, the RAN node can interact with the UE through a MAC CE or an SRB.

The method further includes: during a process in which the UE is in a RRC connected state and monitors a USS, sending a SR resource configuration or a BSR resource configuration in a power saving state to the UE, so that the UE obtains resources for small data packet transmission based on the pre-configured SR resources or BSR resources.

SR resources include at least one of the following: CFRA resources for SR, PUCCH resources for SR, uplink signaling for SR, PUSCH resources for SR;

BSR resources include at least one of the following: PUCCH resources for BSR, uplink signaling for BSR, PUSCH resources for BSR.

For example, as shown in FIG. 9a, while the UE is in the RRC connected state and monitoring the USS, the base station sends an SR resource configuration or a BSR resource configuration in the power saving state to the UE, so that the UE obtains resources for small data packet transmission based on the pre-configured SR resources or BSR resources to perform small data transmission.

The method further includes: during a process in which the UE is in the RRC connected state and monitors the USS, sending time domain information of the SR resource configuration or the BSR resource configuration to the UE, where the time domain information includes at least one of the following: a start time of the SR or BSR resources, a period of the SR or BSR resources, an end time of the SR or BSR resources, a timer which determines the end time of the SR or BSR resources.

The method further includes: during a process in which the UE is in the RRC connected state and monitors the USS, sending a USS configuration in the power saving state and/or a specific Radio Network Temporary Identifier (RNTI) configuration to the UE.

For example, as shown in FIG. 9b, while the UE is in the connected state and monitoring the USS, the base station sends a USS monitoring configuration to the UE in the power saving state.

The method further includes: during a process in which the UE is in the power saving state, sending downlink data and/or downlink signaling to the UE via a downlink grant, where the downlink signaling is used for at least one of the following:
- radio RA resource configuration/reconfiguration for the UE in the RRC connected state, where the RA resource configuration/reconfiguration includes: USS configuration and/or specific RNTI configuration for the UE in the RRC connected state;
- triggering the UE to switch from the power saving state to the RRC connected state.

It should be noted that the aforementioned data transmission method in the embodiments of the present disclosure achieves small data transmission between the RAN node and the UE through three approaches. The first approach involves carrying the NAS PDU via a MAC CE, enabling direct interaction at the MAC layer without requiring processing operations such as RRC connection establishment. The second approach involves configuring an independent SRB by the RAN node (e.g., the base station) or defining a default SRB in the protocol, specifically for carrying the NAS PDU. In this case, the configured SRB does not involve PDCP processing, or the PDCP merely transparently transmits the NAS information; there is no RLC processing, or the RLC adopts the TM mode, but an LCH ID is used to identify this SRB, making this SRB appear as a conventional SDU at the MAC layer. The third approach involves pre-configuring SR or BSR resources for the UE in the idle state, enabling small data transmission through the pre-configured BR or BSR.

As shown in FIG. 11, an embodiment of the present disclosure further provides an electronic device, including: one or more processors 101; a memory 102, storing one or more programs which, when executed by the one or more processors 101, cause the one or more processors 101 to implement: the data transmission method applied to a user equipment UE; or, the data transmission method applied to an RAN node.

The memory 102, as a non-transitory network system, can be used to store non-transitory software programs and non-transitory computer-executable programs. Furthermore, the memory 102 may include high-speed random access memory and may also include non-transitory memory, such as at least one disk storage device, flash memory device, or other non-transitory solid-state storage device. In some implementations, the memory 102 may optionally include memory 102 remotely located relative to the processor 101, and these remote memories 102 can be connected to the processor 101 via a network. Examples of the aforementioned network include, but are not limited to, the Internet, intranets, local area networks, mobile communication networks, and combinations thereof.

The memory 102 may be implemented in forms such as Read-Only Memory (ROM), static storage devices, dynamic storage devices, or Random Access Memory (RAM). The memory 102 may store an operating system and other application programs. When implementing the technical schemes provided by the embodiments of this specification through software or firmware, the relevant program codes are stored in the memory 102 and invoked by the processor 101 to execute the methods of the embodiments of the present disclosure.

The processor 101 may be implemented using a general-purpose Central Processing Unit (CPU), microprocessor, Application-Specific Integrated Circuit (ASIC), or one or more integrated circuits, etc., to execute relevant programs for implementing the technical schemes provided by the embodiments of the present disclosure.

In some embodiments, referring to FIG. 11, the electronic device further includes: an input/output interface for enabling information input and output; a communication interface for enabling communication interaction between this device and other devices, which may be implemented via wired means (e.g., USB, network cable, etc.) or wireless means (e.g., mobile network, WIFI, Bluetooth, etc.); a bus for transmitting information among various components of the device (e.g., the processor 101, the memory 102, the input/output interface, and the communication interface); where the processor 101, the memory 102, the input/output interface, and the communication interface may be communicatively connected within the device via the bus.

An embodiment of the present disclosure further provides a computer-readable storage medium storing computer-executable instructions, the computer-executable instructions being configured to execute and implement: a data transmission method applied to a UE; or,
a data transmission method applied to an RAN node.

An embodiment of the present disclosure further provides a computer program product, including a computer program or computer instructions, where the computer program or computer instructions are stored in a computer-readable storage medium, a processor of a computer device reads the computer program or computer instructions from the computer-readable storage medium, and the processor executes the computer program or computer instructions, causing the computer device to execute and implement: a data transmission method applied to a user equipment (UE); or, a data transmission method applied to an RAN node.

The system architectures and application scenarios described in the embodiments of the present disclosure are intended to more clearly illustrate the technical schemes of the embodiments of the present disclosure and do not constitute limitations on the technical schemes provided by the embodiments of the present disclosure. Those skilled in the art will appreciate that as system architectures evolve and new application scenarios emerge, the technical schemes provided by the embodiments of the present disclosure are equally applicable to similar technical problems.

Those of ordinary skill in the art may understand that all or some of the steps and systems in the methods disclosed above may be implemented as software, firmware, hardware, and appropriate combinations thereof. Certain physical components or all physical components may be implemented as software executed by a processor, such as a central processing unit, digital signal processor, or microprocessor, or as hardware, or as an integrated circuit, such as an application-specific integrated circuit. Such software may be distributed on computer-readable media, which may include computer storage media (or non-transitory media) and communication media (or transitory media). As is well known to those of ordinary skill in the art, the term computer storage media encompasses both volatile and nonvolatile, removable and non-removable media implemented in any method or technology for storing information, such as computer-readable instructions, data structures, program modules, or other data. Computer storage media include, but are not limited to, RAM, ROM, EEPROM, flash memory or other memory technologies, CD-ROM, digital versatile discs (DVD) or other optical disc storage, magnetic cassettes, magnetic tape, magnetic disk storage or other magnetic storage devices, or any other medium that can be used to store desired information and can be accessed by a computer. Furthermore, as is well known to those of ordinary skill in the art, communication media typically embody computer-readable instructions, data structures, program modules, or other data in a modulated data signal, such as a carrier wave or other transmission mechanism, and can include any information delivery medium.

Several embodiments of the present disclosure are described with reference to the accompanying drawings, which are not intended to limit the scope of rights of the present disclosure. Any modifications, equivalent replacements, and improvements made by those skilled in the art without departing from the scope and essence of the present disclosure shall fall within the scope of rights of the present disclosure.

## Claims

1. A data transmission method, applied to a user equipment (UE), the method comprising:
performing transmission of lower-layer signaling carrying a Non-Access Stratum Protocol Data Unit (NAS PDU) with a Radio Access Network (RAN) node.

2. The method according to claim 1, wherein performing the transmission of the lower-layer signaling carrying the NAS PDU with the RAN node comprises:
transmitting uplink lower-layer signaling carrying a NAS PDU to the RAN node;
and/or,
receiving downlink lower-layer signaling carrying the NAS PDU sent by the RAN node.

3. The method according to claim 1, wherein performing the transmission of the lower-layer signaling carrying the NAS PDU with the RAN node comprises:
transmitting first uplink lower-layer signaling carrying a first NAS UE identity to the RAN node;
receiving first downlink lower-layer signaling carrying a second NAS UE identity sent by the RAN node; and
in response to the first NAS UE identity matching the second NAS UE identity, transmitting second uplink lower-layer signaling carrying the NAS PDU to the RAN node and/or receiving second downlink lower-layer signaling carrying the NAS PDU sent by the RAN node, until a preset condition is met.

4. The method according to claim 3, wherein whether the first NAS UE identity and the second NAS UE identity match is determined by one of the following:
in response to the first NAS UE identity being identical to the second NAS UE identity, determining that the first NAS UE identity and the second NAS UE identity match; or
in response to the second NAS UE identity being identical to a segment of the first NAS UE identity, determining that the first NAS UE identity and the second NAS UE identity match.

5. The method according to claim 3, wherein the first uplink lower-layer signaling carries the NAS PDU.

6. The method according to claim 5, wherein:
the first uplink lower-layer signaling comprises one or more uplink lower-layer signaling; and
the NAS PDU and the first NAS UE identity are carried by the same uplink lower-layer signaling, or the NAS PDU and the first NAS UE identity are carried by different uplink lower-layer signaling.

7. The method according to claim 3, wherein the first downlink lower-layer signaling carries the NAS PDU.

8. The method according to claim 7, wherein:
the first downlink lower-layer signaling comprises one or more downlink lower-layer signaling; and
the NAS PDU and the second NAS UE identity are carried by the same downlink lower-layer signaling, or the NAS PDU and the first NAS UE identity are carried by different downlink lower-layer signaling.

9. The method according to claim 3, wherein the preset condition comprises that a timer count exceeds a deadline period,
wherein a starting point or a restarting point of the timer is one of the following: the UE transmitting the NAS PDU, the UE receiving the NAS PDU, the UE receiving an uplink grant, or the UE receiving a downlink grant.

10. The method according to claim 3, wherein the preset condition comprises: receiving a data transmission completion indication sent by the RAN node.

11. The method according to claim 3, wherein, before sending the first uplink lower-layer signaling carrying the first NAS UE identity to the RAN node, the method further comprises:
sending a preamble message to the RAN node; and
receiving a response message sent by the RAN node according to the preamble message, wherein the response message is used to instruct the UE to send the first uplink lower-layer signaling carrying the first NAS UE identity, and/or is used to indicate a resource allocated by the RAN node in response to the preamble message for the UE to send the first uplink lower-layer signaling carrying the first NAS UE identity.

12. The method according to claim 11, wherein, before sending the preamble message to the RAN node, the method further comprises:
receiving a preamble transmission indication message or a paging message carrying a preamble transmission indication sent by the RAN node, wherein the preamble transmission indication message or the paging message carrying the preamble transmission indication is used to instruct the UE to send the preamble message.

13. The method according to claim 11, wherein the preamble message comprises at least one of the following:
a random access preamble;
uplink lower-layer signaling carrying a NAS PDU; or
uplink lower-layer signaling carrying a first NAS UE identity.

14. The method according to claim 11, wherein the response message comprises at least one of the following:
random access response information;
downlink lower-layer signaling carrying a NAS PDU; or
downlink lower-layer signaling carrying a second NAS UE identity.

15. The method according to claim 12, wherein the preamble transmission indication message or a paging message carrying a preamble transmission indication carries a NAS cipher key, wherein the NAS cipher key is used for NAS PDU encryption and/or implicitly indicates whether the UE is allowed to transmit uplink lower-layer signaling carrying a NAS PDU, or indicates the permission or capability to transmit uplink lower-layer signaling carrying a NAS PDU.

16. The method according to claim 1, wherein, before transmitting lower-layer signaling carrying a NAS PDU with a RAN node, the method further comprises:
negotiating a NAS cipher key with a core network node, to determine whether to allow transmitting uplink lower-layer signaling carrying a NAS PDU, or to obtain permission or capability to transmit uplink lower-layer signaling carrying a NAS PDU.

17. The method according to claim 16, further comprising:
renegotiating the NAS cipher key with the core network node through a Tracking Area Update (TAU) procedure;
obtaining an updated NAS cipher key from the core network node through the TAU procedure;
renegotiating the NAS cipher key with the core network node through a NAS PDU; or
obtaining an updated NAS cipher key from the core network node through a NAS PDU.

18. The method according to any one of claims 1 to 17, wherein the lower-layer signaling comprises:
a Media Access Control Control Element (MAC CE);
and/or,
a certain Signaling Radio Bearer (SRB).

19. The method according to claim 1, further comprising:
during a process in which the UE is in an RRC connected state and monitoring a UE-specific search space (USS), receiving, from a RAN node, a Scheduling Request (SR) resource configuration or a Buffer Status Report (BSR) resource configuration in a power saving state, to obtain preconfigured SR resources or BSR resources; and
during a process in which the UE is in the power saving state, acquiring resources for transmitting small data packets via the preconfigured SR resources or BSR resources.

20. The method according to claim 19, wherein:
the SR resources comprise at least one of the following: a Contention-Free Random Access (CFRA) resource for SR, a Physical Uplink Control Channel (PUCCH) resource for SR, Uplink Signaling for SR, a Physical Uplink Shared Channel (PUSCH) resource for SR; and
the BSR resources comprise at least one of the following: a PUCCH resource for BSR, Uplink Signaling for BSR, a PUSCH resource for BSR.

21. The method according to claim 20, further comprising:
during a process in which the UE is in an RRC connected state and monitoring the USS, receiving, from the RAN node, time domain information of the SR resource configuration or the BSR resource configuration, wherein the time domain information comprises at least one of the following: a start time of the SR or BSR resources, a period of the SR or BSR resources, an end time of the SR or BSR resources, a timer determining the end time of the SR or BSR resources.

22. The method according to claim 21, further comprising:
during a process in which the UE is in an RRC connected state and monitoring the USS, receiving, from the RAN node, a USS configuration and/or a certain Radio Network Temporary Identifier (RNTI) configuration in the power saving state.

23. The method according to claim 21, further comprising:
during a process in which the UE is in the power saving state, receiving downlink data and/or downlink signaling transmitted by the RAN node via a downlink grant, wherein the downlink signaling is used for at least one of the following:
radio resource configuration or radio resource reconfiguration for an RRC connected state, the radio resource configuration or radio resource reconfiguration comprises: a USS configuration and/or a certain RNTI configuration for the UE in the RRC connected state; and
triggering the UE to switch from the power saving state to the RRC connected state.

24. A data transmission method, applied to a Radio Access Network (RAN) node, the method comprising:
performing transmission of lower-layer signaling carrying a Non-Access Stratum Protocol Data Unit (NAS PDU) with a user equipment (UE).

25. The method according to claim 24, wherein performing the transmission of the lower-layer signaling carrying the NAS PDU with the UE comprises:
receiving uplink lower-layer signaling carrying a NAS PDU sent by the UE;
and/or,
sending downlink lower-layer signaling carrying a NAS PDU to the UE.

26. The method according to claim 24, wherein performing the transmission of the lower-layer signaling carrying the NAS PDU with the UE comprises:
receiving first uplink lower-layer signaling carrying a first NAS UE identity sent by the UE; and
sending first downlink lower-layer signaling carrying a second NAS UE identity to the UE according to the first uplink lower-layer signaling, wherein the second NAS UE identity is identical to the first NAS UE identity, or the second NAS UE identity is identical to a segment of the first NAS UE identity.

27. The method according to claim 26, wherein the first downlink lower-layer signaling carries the NAS PDU.

28. The method according to claim 24, further comprising:
during a process in which the UE is in a Radio Resource Control (RRC) connected state and monitoring a User Equipment-specific Search Space (USS), sending Scheduling Request (SR) resource configuration or Buffer Status Report (BSR) resource configuration in a power saving state to the UE, such that the UE acquires resources for small data packet transmission based on preconfigured SR resources or BSR resources.

29. An electronic device, comprising:
one or more processors;
a memory, having one or more programs stored thereon, wherein when the one or more programs are executed by the one or more processors, the one or more processors implement:
the data transmission method according to any one of claims 1 to 23; or
the data transmission method according to any one of claims 24 to 28.

30. A computer-readable storage medium, having a computer program stored thereon, wherein when the computer program is executed by a processor, the processor implements:
the data transmission method according to any one of claims 1 to 23; or
the data transmission method according to any one of claims 24 to 28.
